# EUROPÄISCHE PATENTSCHRIFT

(11) **EP 2 756 176 B1**
(45) Veröffentlichungstag und Bekanntmachung des Hinweises auf die Patenterteilung: **13.04.2016**
(21) Anmeldenummer: 12766584.2
(22) Anmeldetag: 13.09.2012
(51) Int. Cl.: F01N 3/20

(54) **ELEKTROMAGNETISCHES DOSIERVENTIL**
ELECTROMAGNETIC METERING VALVE
SOUPAPE ÉLECTROMAGNÉTIQUE DE DOSAGE

(30) Priorität: 13.09.2011 DE 102011053552
(43) Veröffentlichungstag der Anmeldung: 23.07.2014
(73) Patentinhaber: Cummins Ltd., Middlesex, TW18 2BD (GB)
(72) Erfinder: ZAPF, Friedrich, 97753 Karlstadt (DE); SCHMIDT, Christian, 97342 Obernbreit (DE)
(74) Vertreter: Beyer, Andreas
(86) Internationale Anmeldenummer: PCT/EP2012/003843
(87) Internationale Veröffentlichungsnummer: WO 2013/037493

(56) Entgegenhaltungen:
- DE-A1-102007 011 686
- DE-A1-102007 043 532
- DE-U1-202008 015 377
- FR-A1- 2 597 186

## Beschreibung

Die vorliegende Erfindung betrifft ein elektromagnetisches Dosierventil, insbesondere für eine SCR-Dosiereinheit (Selective Catalytic Reduction) zur Abgasnachbehandlung einer Verbrennungskraftmaschine entsprechend dem Oberbegriff des Anspruchs 1. Des Weiteren betrifft die Erfindung eine SCR-Dosiereinheit sowie eine Abgasnachbehandlungseinrichtung, die ein derartiges Dosierventil umfassen.

Ein elektromagnetisches Dosierventil wird in einer Abgasnachbehandlungseinrichtung zur Verringerung eines Stickoxidanteils im Abgas eines Verbrennungsmotors, insbesondere eines Diesel- oder auch Benzinmotors eingesetzt, um eine selektive katalytische Reduktion (SCR) der Verbrennungsabgase zu erreichen. Dem Abgas wird eine unmittelbar reduzierend wirkende Substanz wie Ammoniak, oder ein Vorprodukt zugeführt, durch das in einem nachgeschalteten SCR-Katalysator der Anteil an Stickoxiden im Abgas verringert wird. Dieses Vorprodukt kann eine Harnstoff-Wasser-Lösung (HWL) sein, die im Handel häufig als Adblue bezeichnet wird. Bei der Reaktion des Harnstoffes mit Wasser entsteht Ammoniak NH₃, das bei der selektiven katalytischen Reduktion mit Stickstoffmonoxid NO und Stickstoffdioxids NO₂ zur molekularem Stickstoff N₂ und Wasser H₂O umgewandelt wird. Die Reduktion findet in einem SCR-Katalysator stromabwärts zur Zugabe des HWL statt. Die Zudosierung des HWL erfolgt über eine Dosiereinheit mit einem Dosierventil. Das Dosierventil ist aufgrund seiner Anordnung am Abgasstrang und in der Nähe der Verbrennungskraftmaschine einer hohen thermischen Beanspruchung ausgesetzt, und muss über die gesamte Lebensdauer eine hohe Anzahl (bis zu mehreren Millionen) Schaltimpulse ausführen. Ein Ausfall des Dosierventils führt zu einem Erliegen der SCR-Reaktion, so dass eine Abgasnachbehandlung nicht mehr gewährleistet ist und unerwünschte Stickoxide freigesetzt werden. Dies führt zu einer hohen Luftverschmutzung und zum Verlust einer Straßenzulassung des Fahrzeuges.

Aus dem Stand der Technik sind Dosierventile bekannt, bei denen ein frei beweglicher Anker durch einen Elektromagneten hin- und herbewegt werden kann, wobei dieser Anker einen Dosiermechanismus betätigt, um eine Nadeldüse freizugeben bzw. zu sperren. Aufgrund der hohen Anzahl an Schaltimpulsen ist die mechanische Lagerung des Aktuators entscheidend für die Lebensdauer der Abgasnachbehandlungseinrichtung, da der Anker das wesentliche mechanisch betätigte Element darstellt. In der Regel ist der Anker in einer Gleitlagerführung eines Ventilflansches geführt. So zeigt beispielsweise die DE 10 2008 012 780 A1 einen Anker eines elektromagnetischen Dosierventils, der in einem Gleitlager geführt ist. Ferner ist aus der DE 20 2008 015 377 U1 ein elektromagnetisches Dosierventil mit geführtem Anker bekannt, bei dem der Seitenumfang des Ankers in einer Buchse reibungsgelagert geführt ist. So weisen alle bekannten Anker für Dosierventile zumindest eine ankerbewegte Fläche auf, die in Reibkontakt mit einer ruhenden Außenfläche des Dosierventils steht. Hierdurch tritt mechanischer Verschleiß auf, durch den die Bewegung des Ankers nach mehreren Millionen Hüben so gehindert bzw. beeinträchtigt wird, dass das Ventil nicht mehr dicht schließt bzw. öffnet. Des Weiteren können Koaxialitätsabweichungen dazu führen, dass der Anker schief angezogen wird und auf die Fase des Polkerns, d.h. auf das innere Eisenjoch trifft, so dass der Anker verklemmen kann bzw. das Ventil gehemmt ist.

Aus dem Bereich von Rückschlagventilen ist bekannt, bewegliche Teile eines Ventils an einer Plattenfeder aufzuhängen, die ohne mechanische Reibung eine freie Beweglichkeit des Ventilverschlusses ermöglicht, wie beispielsweise in der DE 33 29 652 A1 beschrieben. Allerdings handelt es sich dabei um passive Bauteile, die einseitig befestigt sind, nicht aktiv betätigbar sind und keine definierbaren Schließkräfte aufweisen müssen.

Ausgehend von dem oben dargestellten Stand der Technik ist es Aufgabe der Erfindung, ein Dosierventil, eine Dosiereinheit sowie eine Abgasnachbehandlungseinrichtung vorzuschlagen, wobei die Lebensdauer des Dosierventils durch eine verbesserte Lagerung des Ankers erhöht ist und die Verstellkräfte definierbar eingestellt werden können, so dass eine verbesserte Dosierung des HWL bereitgestellt und eine wartungsarme und langlebige Abgasnachbehandlung gewährleistet werden kann.

Diese Aufgabe wird durch ein Dosierventil gemäß dem Anspruch 1 und durch eine Dosiereinheit sowie eine Abgasnachbehandlungseinrichtung nach den weiteren nebengeordneten Ansprüchen gelöst. Die abhängigen Ansprüche betreffen vorteilhafte Weiterentwicklungen der Erfindung.

In einem ersten erfindungsgemäßen Aspekt wird ein elektromagnetisches Dosierventil, insbesondere für eine SCR-Dosiereinheit zur Abgasnachbehandlung einer Verbrennungskraftmaschine vorgeschlagen, das einen Elektromagneten mit einer zylindrischen Magnetspule, einem inneren, im Wesentlichen hohlzylinderförmigen, und einem äußeren, im Wesentlichen topfförmigen Eisenjoch, sowie einem ring- oder scheibenförmigen Anker zur Betätigung einer Verschlussmechanik einer Ventildüse umfasst, die an einem axialen Ende des Elektromagneten den magnetischen Kreis zwischen innerem und äußerem Eisenjoch axial verschieblich schließen bzw. öffnen kann. Der Anker ist durch einen Ankersitz geführt, wobei der Ankersitz in Richtung des Elektromagneten durch ein Federelement und in Richtung der Ventildüse durch ein Zentrierelement federelastisch geführt und gelagert ist.

Mit anderen Worten wird ein Dosierventil vorgeschlagen, bei dem ein Anker durch einen Ankersitz geführt ist, wobei der Ankersitz zwischen einem Federelement und einem Zentrierelement radial fixiert eingespannt und axial federelastisch geführt und gelagert ist. Der Anker besteht aus einem Material hoher Permeabilität, d.h. einem ferromagnetischen Material wie beispielsweise Eisen, Ferrite, Nickel, Kobalt, Mangan oder einer Mischung davon. Das Federelement dient der axialen Rückstellung und das Zentrierelement der radialen Fixierung des Ankers. Federelement und Zentrierelement sind vorzugsweise aus einem dia- oder paramagnetischen Material, insbesondere Metall hergestellt. Der Anker ist nicht mechanisch an seinen Außenoberflächen entlang einer Wandung eines Flansches geführt, sondern ist frei beweglich zwischen Federelement und Zentrierelement eingespannt und lässt sich in axialer Richtung federelastisch bewegen. In radialer Richtung behindert das Zentrierelement eine Bewegung und zentriert den Anker, so dass der Anker berührungslos zu umgebenden Teilen des Ventils gelagert ist.

Im Ergebnis tritt keine mechanische Reibung gegenüber Außenoberflächen auf, und es können über die Lebensdauer des Ventils Millionen von Hüben durchgeführt werden, ohne dass der Anker verrutscht, verklemmt oder schwergängig wird. Eine Koaxialitätsabweichung wird durch die Ausrichtung des Ankersitzes im Zentrierelement verhindert, wodurch der Anker im Wesentlichen horizontal und nicht schief angezogen wird, so dass der Ankersitz nicht an der Fase eines inneren Poljochs bzw. Polkerns verklemmen kann. Die Beschaffenheit und Vorspannung des Federelements definiert die Schließkraft, die durch die magnetische Anziehung des Elektromagneten ausgeübt wird. Die Federkraft des Federelements kann durch eine einstellbare Verspannung frei einstellbar und nachjustierbar sein. Das Federelement stellt die Verschlusskraft der Ventildüse zur Verfügung, während durch die elektromagnetische Anziehung des Ankers an das Eisenjoch des Elektromagneten eine Öffnung des Ventilsitzes bewirkt wird. Die magnetische Anziehungskraft des Ankers bei stromdurchflossener Magnetspule ist größer als die Federkraft des Federelements, während bei unterbrochenem Stromfluß die Federkraft größer als eine etwaig vorhandene magnetische Haltekraft eines Restmagnetismus des Eisenjochs des Elektromagneten ist. Aufgrund fehlender Führungsflächen des Ankers kann der Anker mit Ankersitz sehr viel dünner und gewichtssparender als bei einem lagergeführten Anker ausgebildet sein, so dass die mechanische Beweglichkeit erhöht ist. Die eingespannte Aufhängung des Ankers zwischen Feder- und Zentrierelement ohne eine Lagerführung ermöglicht eine mechanisch langlebige Auslegung des Dosierventils und eine Verringerung von Abnutzungserscheinungen, und bewirkt ferner eine kurze Ansprechzeit und ein definiertes Schaltverhalten. Die Qualität der Abgasnachbehandlung wird hierdurch insgesamt verbessert.

Gemäß einer vorteilhaften Weiterentwicklung der Erfindung kann der Ankersitz einstückig mit dem Anker ausgebildet sein, wobei der Anker vorzugsweise als Scheibenanker ausgebildet ist. Der Ankersitz bildet eine Befestigung zu dem Federelement in Richtung Elektromagneten und zu dem Zentrierelement in Richtung Ventildüse aus, so dass ein kompaktes, leichtgewichtiges und einstückiges Ankerbauteil mit Befestigungsvorrichtung für Federelement und Zentrierelement kostengünstig herstellbar ist. Es ist aber auch denkbar, dass das Federelement in Richtung Ventildüse und das Zentrierelement in Richtung Elektromagneten weist.

Gemäß einer vorteilhaften Weiterbildung der Erfindung kann der Anker ein Ringanker sein, der eine kreisförmige Ausnehmung aufweist, und der Ankersitz kann durch diese Ausnehmung durchsteckbar sein, wobei der Ankersitz einen Ankerstützflansch zur Abstützung des Ankers gegenüber der Verschlussmechanik der Ventildüse umfasst. Gemäß diesem Ausführungsbeispiel wird ein zweiteilige Ausführung von Anker und Ankersitz vorgeschlagen, wobei der Anker beispielsweise aus weichmagnetischem Material bestehen kann, das eine hohe Permeabilität µ aufweist, und der Ankersitz bevorzugt unmagnetisch ausgebildet ist, und eine Aufnahme für das Feder- bzw. Zentrierelement auf gegenüberliegenden Seiten aufweist. Der Anker stützt sich auf einem Stützflansch des Ankersitzes ab und kann beispielsweise durch eine Presspassung mit dem Ankersitz kraftschlüssig verbunden sein.

Gemäß einer vorteilhaften Weiterbildung der Erfindung kann der Ankersitz in Richtung Elektromagneten einen Außenkonusabschnitt haben und das innere Eisenjoch kann einen formkomplementären Innenkonusabschnitt aufweisen.

Gemäß einer vorteilhaften Weiterbildung der Erfindung kann das Federelement eine Schraubenfeder sein, die entlang der Achse des inneren Eisenjochs durch den Elektromagneten geführt ist und sich an einem Gewindebolzen abstützt. Der Ankersitz kann in Richtung Elektromagneten bevorzugt einen Federzapfen zur Aufnahme der Schraubenfeder umfassen. Die Schraubenfeder kann etwa die Länge des inneren Eisenjochs aufweisen, und die Schraubfedervorspannung kann durch Variation der Einschraubtiefe des Gewindebolzens einstellbar sein. Die Schraubenfeder dient dazu, nach erfolgtem Anzug des Elektromagneten und Abschalten des Stroms des Elektromagneten selbst bei Restmagnetismus des Eisenjochs ein sicheres Ablösen und damit Schließen des Ventils sicherzustellen. Die Vorspannung und Beschaffenheit der Schraubenfeder ist wesentlich für die Verschlusskraft des Dosierventils. Durch Verstellung des Gewindebolzens kann ein Nachjustieren der Federkraft erfolgen.

Gemäß einem weiteren vorteilhaften Ausführungsbeispiel des Ventils kann das Zentrierelement eine Zentrierscheibe sein, die eine radial steife und axial bewegliche Führung des Ankersitzes bietet. Eine Zentrierscheibe ist ein im wesentlichen kreisrunder Ring, dessen Außenumfang an einer Wandung des Dosierventils befestigt werden kann und dessen Innenausnehmung gegenüber dem Außenumfang axial verschieblich aber radial fixiert ist. Das Zentrierelement weist in der Regel keine federelastische Eigenschaft auf, kann allerdings zur Unterstützung der Ventilbewegung Federkräfte ausüben. Der Außenumfang kann Befestigungsmittel zur Befestigung am Flansch des Dosierventils aufweisen und der Innenumfang der Ringausnehmung kann Befestigungsmittel zur Aufnahme, Führung und Befestigung des Ankersitzes aufweisen. Die Zentrierscheibe kann in Form einer Ringfeder ausgebildet sein. Sie stellt eine axiale Beweglichkeit bereit, wobei ein radiales Ausweichen des Ankers durch die Ausgestaltung der Zentrierscheibe verhindert wird. Dadurch wird eine Leichtgängigkeit der Führung des Ankers in axialer Richtung bei gleichzeitiger Fixierung der radialen Position des Ankers erreicht.

Ausgehend von dem vorgenannten Ausführungsbeispiel kann die Zentrierscheibe einen äußeren Stützring zur Abstützung der Zentrierscheibe am Ventilflansch, einen inneren Aufnahmering zur führenden Lagerung des Ankersitzes, sowie mehrere, bevorzugt drei elastische Federarme aufweisen, die im Wesentlichen entlang eines Umfangsabschnitts von Stütz- zu Aufnahmering verlaufend eine axial bewegliche und radial steife Führung des Aufnahmerings bereitstellen. Die Federarme haben keine federnde Wirkung, sie bewirken allerdings eine leichtgängige axiale Beweglichkeit des Aufnahmerings gegenüber dem Stützring. Durch die Erstreckung der Federarme entlang eines Umfangabschnitts wird eine radiale Fixierung sowie axiale Beweglichkeit ermöglicht. Vorteilhafterweise ist das Zentrierelement aus einem Metall, beispielsweise Stahl gefertigt.

Ausgehend von dem vorgenannten Ausführungsbeispiel kann der Aufnahmering mehrere, bevorzugt drei oder vier Zentrierfahnen zur Aufnahmeführung des Ankersitzes umfassen und/oder der Stützring mehrere, bevorzugt drei oder vier Fixierfahnen zur Befestigung der Zentrierscheibe an der Unterseite des Elektromagneten und am Ventilflanschboden umfassen. Durch Zentrierfahnen bzw. Fixierfahnen kann eine Halterung des Ankersitzes bzw. der Zentrierscheibe im Ventilflansch bereitgestellt werden. Der Ankersitz kann in den Aufnahmering eingesteckt bzw. an diesem beispielsweise durch eine Schrumpfpassung befestigt werden und die Zentrierscheibe kann in den Ventilflansch eingelegt bzw. eingeklemmt werden. Die Fahnen ermöglichen eine Befestigung an den Ventilflansch bzw. des Ankersitzes.

Bevorzugt kann in einem weiteren Ausführungsbeispiel die Zentrierscheibe aus einem federelastischen Material, insbesondere einem Federstahl oder Berylliumkupfer gefertigt sein, um die Federwirkung des Federelements zu unterstützen. Durch eine federnde Wirkung der Zentrierscheibe kann eine unterstützende Kraftwirkung ausgeübt werden, um ein sicheres Verschließen des Ventils nach Abschaltung des Elektromagneten zu gewährleisten.

Gemäß einer vorteilhaften Weiterentwicklung der Erfindung kann eine Dichtungsmembran eine Aktuatorfläche des Ankers fluiddicht gegenüber der Verschlussmechanik der Ventildüse, insbesondere einer Ventilnadel, abdichten. Durch eine mechanisch flexible und fluiddichte Dichtungsmembran wird eine mechanische Verstellung des Ankers an die Verschlussmechanik weitergeleitet, um die Verschlussnadel an der Ventildüse durch die Ankerbewegung zu schließen bzw. zu öffnen. Die Dichtungsmembran verhindert, dass Fluid, insbesondere HWL, in den Elektromagneten bzw. an bewegliche Teile des Ventils gelangt, und schützt diese vor der korrosiven Wirkung des HWL, das beliebige Materialien außer Edelstahl oder bestimmte Kunststoffsorten angreifen kann. Hierdurch wird ein verbesserter Korrosionsschutz erreicht und die Lebensdauer des Dosierventils erhöht.

In einem weiteren Aspekt der Erfindung wird eine SCR-Dosiereinheit zur Abgasnachbehandlung für eine dosierte Abgabe eines Fluids in einen Abgasstrang einer Verbrennungskraftmaschine vorgeschlagen, wobei die Dosiereinheit ein Dosierventil nach einem der vorgenannten Ausführungsbeispiele umfasst. Eine derartige Dosiereinheit weist eine wesentlich höhere Lebensdauer gegenüber bekannten Dosiereinheiten auf, da das Dosierventil aufgrund der "Aufhängung" des Ankers zwischen einem Feder- und Zentrierelement mechanisch reibungsfrei arbeitet und somit eine hohe Anzahl von Ventilbewegungen präzise ausführen kann ohne zu verkanten.

Gemäß eines weiteren Aspekt wird eine Abgasnachbehandlungseinrichtung für eine Verbrennungskraftmaschine, insbesondere für einen Antriebsmotor eines Fahrzeugs, bevorzugt eines Dieselmotors, vorgeschlagen, der eine vorstehend beschriebene SCR-Dosiereinheit umfasst.

Weitere Vorteile ergeben sich aus der vorliegenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Blockdiagramm einer Abgasnachbehandlungseinrichtung;
- Fig. 2: eine Schnittdarstellung einer Dosiereinheit des Stands der Technik;
- Fig. 3: ein Ausführungsbeispiel einer erfindungsgemäßen Dosiereinheit;
- Fig. 4: eine Detailansicht des Dosierventils der Dosiereinheit aus Fig. 3;
- Fig. 5: ein Ausführungsbeispiel eines Zentrierelements für ein Dosierventil nach Fig. 4;
- Fig. 6: das Zentrierelement aus Fig. 5 in einer perspektivischen Ansicht;
- Fig. 7: ebenfalls in einer perspektivischen Ansicht ein weiteres Ausführungsbeispiel eines Zentrierelements für ein Dosierventil nach Fig. 4;
- Fig. 8: das Zentrierelement gemäß Fig. 7 in einer Darstellung analog Fig. 5.

In den Figuren sind gleiche oder gleichartige Komponenten mit gleichen Bezugszeichen beziffert.

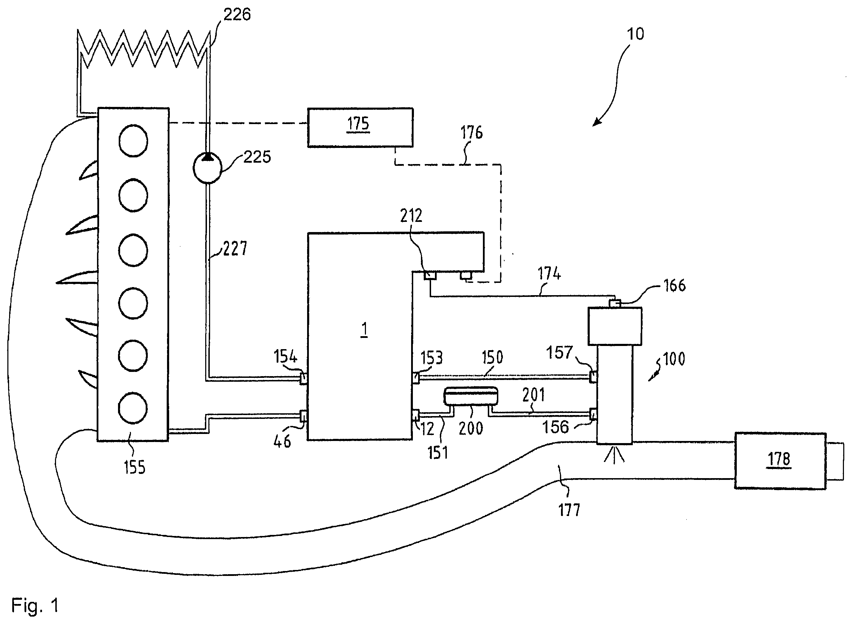

Die Fig. 1 zeigt eine typische Abgasnachbehandlungseinrichtung 10. Die Abgasnachbehandlungseinrichtung 10 umfasst eine Pumpeneinheit 1, eine Dosiereinheit 100 zur dosierten Einspritzung einer Harnstoff-Wasser-Lösung, im Folgenden als HWL bezeichnet, in einen Abgasstrang 177 einer Verbrennungskraftmaschine 155 stromaufwärts eines SCR-Katalysators 178 und einen HWL-Tank 200. Alle Komponenten der Abgasnachbehandlungseinrichtung 10 sind so ausgeführt, dass ein Einfrieren der drucklosen HWL nicht zu Beschädigungen führt. Die Pumpeneinheit 1 erhält über eine Signalleitung 176 Steuerinformationen von einem Steuergerät 175, das mit der Motorsteuerung des Kraftfahrzeugantriebsmotors 155 kommuniziert. Diese Signalleitung leitet unter anderem CAN-Bus-Signale weiter und erhöht die HWL-Einspritzleistung bei vermehrtem Abgasausstoß der Verbrennungskraftmaschine 155.

An einem HWL-Sauganschluss 12 entnimmt die Pumpeneinheit 1 HWL aus einem HWL-Tank 200, um diese zur Versorgung der Dosiereinheit 100 zu pumpen. Auf der gegenüberliegenden Seite der Pumpeneinheit 1 sind zwei Kühlwasseranschlüsse 46, 154 vorgesehen. Über die beiden Kühlwasseranschlüsse 46, 154 wird Kühlwasser zur Aufheizung der Pumpeneinheit 1 bei kühlen Umgebungstemperaturen geführt. Die beiden Kühlwasseranschlüsse 46, 154 sind in den Kühlwasserkreislauf 227 eines Kraftfahrzeugantriebsmotors 155 geschaltet, wodurch die Pumpeneinheit 1 durch das heiße Kühlwasser vom Kühlwasserkreislauf 227 des Kraftfahrzeugantriebsmotors 155 aufgetaut bzw. in betriebswarmer Temperatur gehalten werden kann. Der Kühlwasserkreislauf lässt mittels einer Kühlwasserpumpe 225 das Kühlwasser durch den Motorblock der Verbrennungskraftmaschine 155 fließen, wobei überschüssige Wärme über einen Luft-Kühlwasser-Wärmetauscher 226 an die Umgebungsluft bzw. den Fahrtwind abgegeben wird.

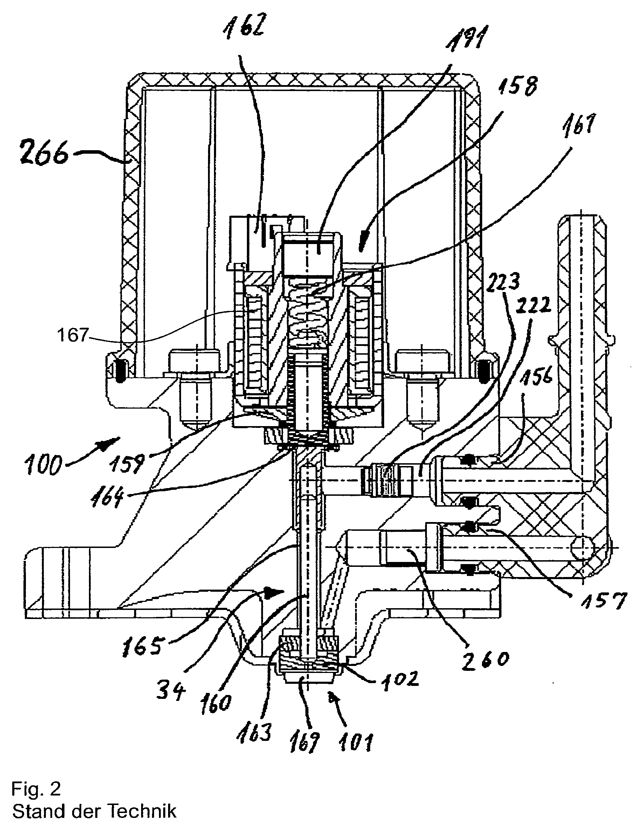

Die Pumpeneinheit 1 entnimmt über den HWL-Sauganschluss 12 HWL aus dem Tank 200, setzt diese unter Druck und gibt es über den HWL-Druckanschluss 153 an die Dosiereinheit 100 ab. Über die externe HWL-Leitung 150 ist der HWL-Druckanschluss 153 mit dem Zulaufanschluss 157 der Dosiereinheit 100 verbunden. Über die HWL-Leitung 151 ist der HWL-Sauganschluss 12 der Pumpeneinheit 1 mit einem HWL-Tank 200 verbunden und der Ablaufanschluss 156 der Dosiereinheit 100 ist durch eine weitere HWL-Leitung 201 mit dem HWL-Tank 200 verbunden, so dass sich zur Erzielung eines kontinuierlichen Umlaufstroms des HWL über eine in Fig. 2 gezeigte Rücklaufblende 223 in der Dosiereinheit 100 ein Kreislauf ausbildet. Ein mehrpoliger Kontaktstecker 212 stellt die Verbindung zur Steuereinheit 175 und zur Spannungsversorgung her. Die Kommunikation erfolgt über CAN-Bus-Signale.

Eingespritzt wird die HWL durch ein Dosierventil 34 der Dosiereinheit 100 in einen Bereich des Abgasstranges 177, der vor einem Katalysator 178 liegt. Die Dosiereinheit 100 ist über einen mehrpoligen Kontaktstecker 166, eine elektrische Leitung 174 und den mehrpoligen Kontaktstecker 212 mit der Pumpeneinheit 1 verbunden.

Die in Fig. 2 dargestellte Dosiereinheit 100 des Stands der Technik umfasst das elektromagnetische Dosierventil 34. Dieses elektromagnetische Dosierventil 34 weist einen Elektromagneten 158 mit einem Anker 159 auf, der eine Schraubendruckfeder 161 gegen deren Federkraft zusammendrücken kann, so dass der HWL-Druck eine Nadel 160 in die geöffnete Stellung schieben kann. Die Schraubendruckfeder 161 stützt sich dabei an einem Gewindebolzen 191 ab, mit welchem die Vorspannung der Schraubendruckfeder 161 einstellbar ist. Wird der Elektromagnet 158 nicht über seine Anschlüsse 162 bestromt, so drückt die Schraubendruckfeder 161 die Nadel 160 wieder gegen einen Ventilsitz 102 in eine geschlossene Stellung. Die relativ lange Nadel 160 ist einerseits in einem Linear-Gleitlager 163 und andererseits mittels einer Dichtungsmembran 164 geführt, die den Elektromagneten 158 vor der aggressiven HWL schützt. Zwischen diesen beiden Führungen ist ein Kühlkanal 165 vorgesehen, der den Kreislauf zwischen zwei Dosiereinheitsanschlüssen 156, 157 schließt. Der Kühlkanal 165 wird von einem umlaufenden Strom von HWL durchflossen, der die Dosiereinheit 100 kühlt, die sich durch die Abwärme des Abgasstrangs aufheizt. Die Dosiereinheitsanschlüsse 156, 157 sind an den HWL-Leitungen 150, 201 angeschlossen.

Von dem einen als Zulauf ausgebildeten Dosiereinheitsanschluss 157 wird die HWL über ein Filtersieb 260 durch mehrere Ausnehmungen im vorderen Linear-Gleitlager 163 zum Ventilsitz 102 geleitet. Gelangt die HWL im bestromten Zustand des Elektromagneten 158 durch eine zentrale Öffnung im Ventilsitz 102 hindurch, so wird die HWL durch eine Zerstäuberdüse 101 geleitet. Diese Zerstäuberdüse 101 ist als Dralldüse ausgeführt und weist mehrere übereinander gelegte Düsenscheiben auf. Diese Düsenscheiben sind mittels eines Austrittsdüseneinsatzes 169 gegen den Ventilsitz 102 gespannt. Der Austrittsdüseneinsatz 169 weist einen - nicht näher ersichtlichen - sich trichterförmig aufweitenden Austritt auf.

Die Dosiereinheit 100 weist vor dem Dosiereinheitsanschluss 156 in einem Rücklaufkanal 222 die Rücklaufblende 223 auf. Über diese Rücklaufblende 223 wird die ständige Durchströmung der Dosiereinheit 100 mit HWL sichergestellt. Dadurch wird zum einen die Temperatur der Dosiereinheit 100 niedrig gehalten. Zum anderen wird beim Ausschalten der Stromversorgung der Druck in der Abgasnachbehandlungseinrichtung 10 auf Tankdruck abgebaut, ohne dass dafür Energie zum Öffnen eines Ventils notwendig ist. Im elektromagnetischen Dosierventil 34 kann sich die HWL gegen die Dichtungsmembran 164 ausdehnen.

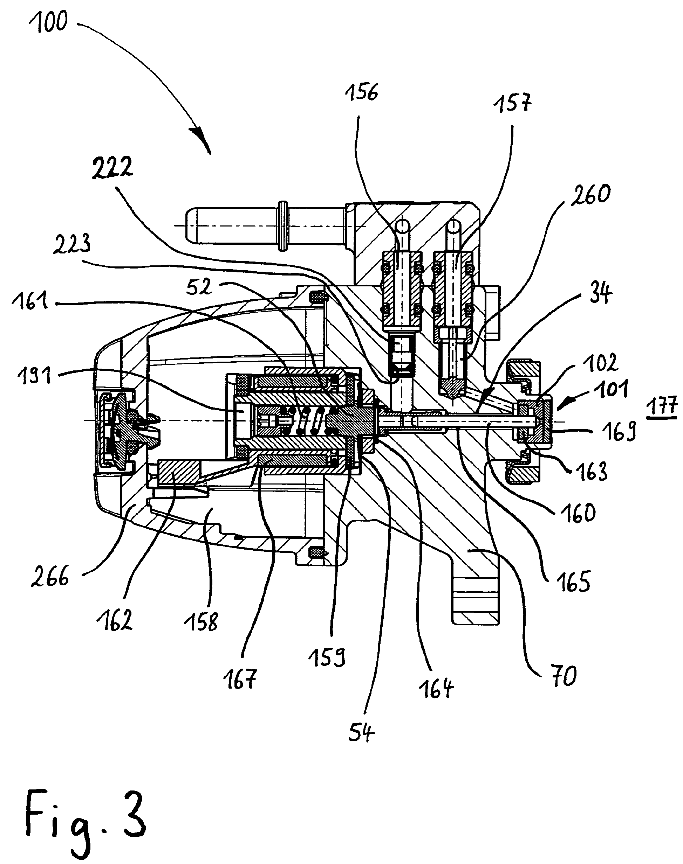

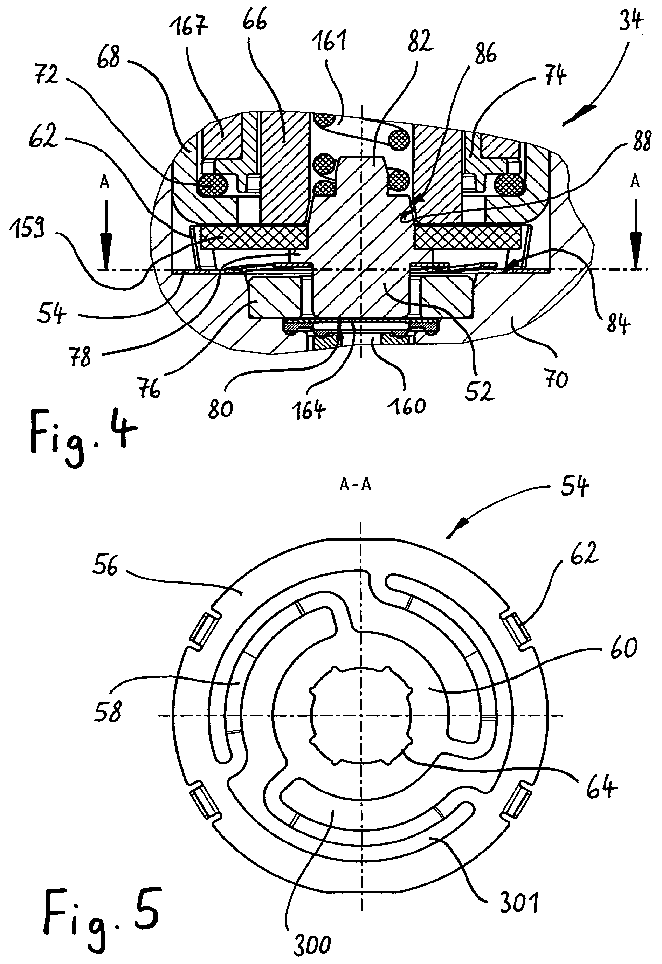

Fig. 3 stellt eine Dosiereinheit 100 eines ersten Ausführungsbeispiels der Erfindung dar, wobei ein Teilausschnitt A in Fig. 4 vergrößert dargestellt ist. Die Dosiereinheit 100 umfasst einen HWL-Zulauf 157, mit dem HWL an eine Zerstäuberdüse 101 geführt wird. Durch Betätigung einer Ventilnadel 160, die durch den Elektromagneten 158 auf und ab bewegt wird, kann ein Austrittsdüseneinsatz 169 des Ventils 34 freigegeben bzw. verschlossen werden. Die Ventilnadel 160 wird im unbestromten Zustand des Elektromagneten 158 durch die Federkraft einer Spiralfeder 161 fluiddicht gegen einen Ventilsitz 102 gepresst. Die Spiralfeder 161 ist im axialen Inneren der Magnetspule 167 des Elektromagneten 158 angeordnet. Zur Kühlung des Dosierventils 34 wird HWL im Umlauf über einen Kühlkanal 165 geführt, wobei das HWL ein Filtersieb 260, eine Rücklaufblende 223 und einen Rücklaufkanal 222 durchströmt und durch einen HWL-Rücklauf 156 zurück in einen Fluidtank 200 fließt.

Die Dosiereinheit 100 weist einen Dosierflansch 70 auf, der zu einem Gehäuse ausgeformt ist. In diesem Gehäuse sind Kanäle für die HWL-Zuleitung 157 bzw. HWL-Rücklauf 156 und den Ventilsitz 102 gegenüber dem Abgasstrang 177 eingebettet. Der Dosierflansch 70 koppelt den Elektromagneten 158 mit Öffnungsmechanismus an einen Abgaskanal des Abgasstrangs 177 einer Verbrennungskraftmaschine 155.

Die Ventilnadel 160 ist in einem Linear-Gleitlager 163 geführt, so dass reibungsarm ein Öffnen und Schließen der Einheit 100 ermöglicht ist. Der elektromagnetische Bereich des Dosierventils 34 umfasst einen Elektromagneten 158, der eine Magnetspule 167 aufweist, in deren Inneren ein zylinderförmiges, inneres Eisenjoch 66 geführt ist, und deren Äußeres von einem weiteren, äußeren Eisenjoch 68 umgeben ist. Durch Bestromung der Magnetspule 167 über die elektrische Anschlussleitung 162 wird ein axial ausgerichtetes Magnetfeld erzeugt, das vom inneren Eisenjoch über einen Anker 159 zum äußeren Eisenjoch geführt wird, wobei der Anker 159 durch die Reluktanzkraft in Richtung des Inneren des Elektromagneten 158 gezogen wird. Hierdurch wird die Feder 161 gespannt und ein Zentrierelement 54 führt den Ankersitz 52 des Ankers 159 axial beweglich aber radial fixiert in Richtung des axialen Endes des inneren Eisenjochs 66 des Elektromagneten 159. Durch diese Bewegung des Ankers 159 wird die Ventilnadel 160 angehoben und die Zerstäuberdüse 102 geöffnet.

Ist der Stromfluss beendet, so presst die Schraubenfeder 161 den Anker 159 in Richtung Ventildüse 101 und schließt den Ventilsitz 102, so dass kein weiteres HWL in den Abgasstrang 177 ausgegeben wird. Die Schraubenfeder 161 stützt sich gegenüber einem Gewindebolzen 101 ab, der durch Hinein- bzw. Herausschrauben die Vorspannung der Schraubenfeder verstärken bzw. abschwächen kann. Der Elektromagnet 158 ist von einem Deckel 266 abgedeckt, der die Dosiereinheit 100 gegenüber Umwelteinflüssen und mechanischen Beschädigungen schützt.

In der Fig. 4 ist der Teilausschnitt A der Fig. 3 dargestellt. Der Elektromagnet 158 umfasst an seiner der Ventildüse 101 zugewandten Seite den ringförmigen Anker 159, in dessen innerer Ausnehmung der Ankersitz 52 angeordnet ist. Der Elektromagnet 158 weist die Magnetspule 157, das innere zylinderförmige Eisenjoch 66 sowie das äußere topfförmige Eisenjoch 68 auf, das das Magnetfeld der Magnetspule 167 führt. Die Magnetspule 167, ist auf einen Spulenträger 74 gewickelt. Fließt Strom durch die Magnetspule 167, wird durch den Magnetfluss in den beiden Jochen 66, 68 der Anker 159 zum Schließen des magnetischen Kreises aufgrund einer Reluktanzkraft angezogen, so dass sich der Ankersitz 52 und damit die angeschlossene mechanisch gekoppelte Ventilnadel 160 nach oben bewegt und die Ventildüse 101 freigibt. Der Ankersitz 52 stützt sich in Richtung Elektromagneten 158 auf der Schraubenfeder 161 ab, die einen Federzapfen 82 des Ankersitzes 52 umgreift. Der Anker 159 aus weichmagnetischem Material sitzt auf einem Ankerstützflansch 78 des Ankersitzes 52. Der Ankerstützflansch 78 stützt den Anker 159 gegen die in Fig. 5 dargestellte Zentrierscheibe 54 ab. Der Ankersitz 52 ist über eine Dichtungsmembran 164 mechanisch mit der Ventilnadel 160 gekoppelt, wobei die Dichtungsmembran 164 ein Eindringen von aggressiver HWL in den beweglichen Teil des Ventils 34 verhindert. Ein elastischer Ring 72 koppelt das äußere Eisenjoch 68 mit dem Magnetspulenträger 74 zum Längenausgleich für unterschiedliche Temperaturausdehnungen. Die Zentrierscheibe 54 stützt sich mit Fixierfahnen 62 gegenüber dem Ventilflansch 70 ab. Der Ankersitz 52 weist an seiner dem Elektromagneten 158 zugewandten Seite eine konische Verjüngung 88 auf, um in einen ebenfalls konisch ausgeformten Sitz 86 des Eisenjochs 66 einzutauchen. Der Ankersitz 52 ist in axialer Richtung zwischen der Schraubenfeder 161 und der Membran 164 eingeklemmt. Ein radiales Auswandern wird durch die Zentrierscheibe 54 verhindert.

Fig. 5 zeigt im Detail eine Draufsicht auf eine Zentrierscheibe 54, die einen äußeren Stützring 56 sowie einen inneren Aufnahmering 60 zur Aufnahme eines Ankersitzes 52 aufweist. Der äußere Stützring 56 ist mit dem inneren Aufnahmering 60 über Federarme 58 verbunden, die jeweils über ca. 120° in Umfangsrichtung entlang geführt eine axiale Verschieblichkeit und radiale Fixierung des Ankersitzes 52 gewährleisten. In der inneren Ausnehmung des Aufnahmerings 60 sind Zentrierfahnen 64 angeordnet, um den Ankersitz 52 aufzunehmen und zentrisch zu befestigen bzw. zu führen. Am Außenumfang des Stützrings 56 sind die Fixierfahnen 62 angeordnet, um die Zentrierscheibe im Ventilflanschsitz 70 eingepresst bezüglich des Elektromagneten 158 zu fixieren.

In der inneren Ausnehmung des Aufnahmerings 60 sind die vier Zentrierfahnen 64 in Umfangsrichtung gleichmäßig verteilt angeordnet. Die Federarme 58 weisen radial innen zum Aufnahmering 60 ein größeren Spalt 300 auf, als radial außen zum äußeren Stützring 56. Der radial äußere Spalt 301 zwischen den Federarmen 58 und dem äußeren Stützring 56 ist größer als der radial innere Spalt 300.

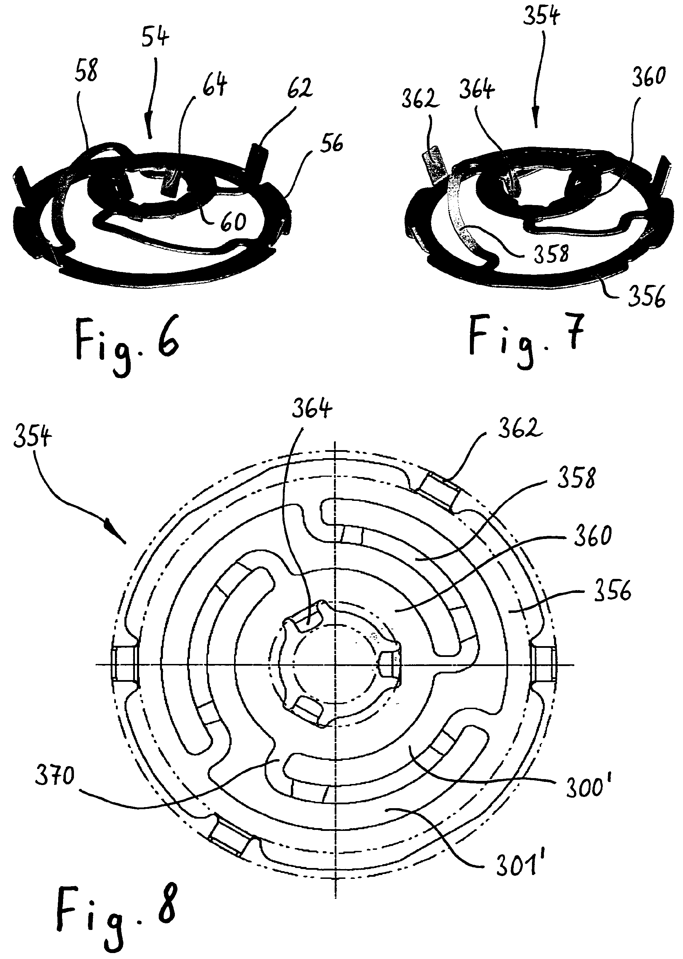

Gegenüber dieser in Fig. 6 perspektivisch dargestellten Geometrie zeigt Fig. 8 in Draufsicht eine zum Stanzen noch geeignetere Geometrie einer Zentrierscheibe 354. Dabei ist eine Zentrierfahne 364 weniger vorgesehen, womit das Stanzwerkzeug einfacher wird. Es sind also drei Zentrierfahnen 364 gleichmäßig verteilt. Überdies sind der radial innere Spalt 300' und der radial äußere Spalt 301' gleich breit.

Jede der drei Zentrierfahnen 364 ist an der gleichen umfangsmäßigen 120°-Winkelposition vorgesehen wie ein sich vom Aufnahmering 360 ausgehend radial nach außen erstreckender Ansatz 370 des jeweiligen Federarmes 358.

Der Werkstoff der Zentrierscheibe 54 bzw. 354 kann eine Zugfestigkeit im Bereich von beispielsweise 1100 bis 1450 N/mm² aufweisen.

Die dargestellte Abgasnachbehandlungseinrichtung kann insbesondere bei einem schweren Nutzfahrzeug Anwendung finden, welches zumeist mit einem Dieselmotor ausgeführt ist. Bei Dieselmotoren ist die NOx-Reduktion besonders notwendig. Zum anderen sind die Bauraumverhältnisse und Beschleunigungen bei einem solchen schweren Nutzfahrzeug derart, dass sich die Anordnung einer infolge des Elektromagneten 158 relativ großen und schweren Dosiereinheit anbietet. Die Erfindung kann jedoch auch bei kleinen Personenkraftwagen Anwendung finden. Ferner kann die Erfindung auch bei Benzinmotoren Anwendung finden.

### Bezugszeichenliste

- 1: Pumpeneinheit
- 10: Abgasnachbehandlungseinrichtung
- 12: HWL-Sauganschluss
- 34: Dosierventil
- 46: Kühlwasseranschluss-Eingang
- 52: Ankersitz
- 54: Zentrierscheibe
- 56: Stützring
- 58: Federarm
- 60: Aufnahmering
- 62: Fixierfahne
- 64: Zentrierfahne
- 66: inneres Eisenjoch
- 68: äußeres Eisenjoch
- 70: Ventilflansch
- 72: elastischer Ring
- 74: Spulenträger
- 76: Pressring
- 78: Ankerstützflansch
- 80: Aktuatorfläche
- 82: Federzapfen
- 84: Ventilflanschboden
- 86: Außenkonusabschnitt des Ankersitzes
- 88: Innenkonusabschnitt des inneren Eisenjochs
- 100: Dosiereinheit
- 101: Zerstäuberdüse - Dralldüse
- 102: Ventilsitz
- 150: HWL-Verbindungsleitung
- 151: HWL-Verbindungsleitung
- 153: HWL-Druckanschluss
- 154: Kühlwasseranschluss-Ausgang
- 155: Verbrennungskraftmaschine HWL Dosiereinheitsanschluss -
- 156: Rücklauf HWL-Dosiereinheitsanschluss -
- 157: Zulauf
- 158: Elektromagnet
- 159: Anker
- 160: Ventilnadel
- 161: Schraubenfeder
- 162: Elektromagnet-Anschluss
- 163: Linear-Gleitlager
- 164: Dichtungsmembran
- 165: Kühlkanal
- 166: Kontaktstecker
- 167: Magnetspule
- 169: Austrittsdüseneinsatz Elektrische Steuer-
- 174: /Versorgungsleitung
- 175: Steuergerät
- 176: CAN-BUS-Steuerleitung
- 177: Abgasstrang
- 178: Katalysator
- 191: Gewindebolzen
- 200: HWL-Tank
- 201: HWL-Verbindungsleitung
- 212: Kontaktstecker
- 222: Rücklaufkanal
- 223: Rücklaufblende
- 225: Kühlwasserpumpe
- 226: Luft-Kühlwasser-Wärmetauscher
- 227: Kühlwasserleitung
- 260: Filtersieb
- 266: Deckel
- 300: Radial innerer Spalt
- 301: Radial äußerer Spalt

## Patentansprüche

1. Elektromagnetisches Dosierventil (34), insbesondere für eine SCR-Dosiereinheit (100) zur Nachbehandlung des Abgases einer Verbrennungskraftmaschine (155), mit einem Elektromagneten (158), der aufweist eine zylindrische Magnetspule (167), ein inneres, im Wesentlichen hohlzylindrisches und ein äußeres, im Wesentlichen topfförmiges Eisenjoch (66, 68) sowie einen ring- oder scheibenförmigen, axial verschiebbaren Anker (159) zur Betätigung einer Verschlussmechanik einer Ventildüse (101), der an einem axialen Ende des Elektromagneten (158) durch Axialverschiebung einen magnetischen Kreis zwischen dem inneren und dem äußeren Eisenjoch (66, 68) schließen bzw. öffnen kann,
**dadurch gekennzeichnet, dass**
- der Anker (159) durch einen Ankersitz (52) geführt ist, und
- der Ankersitz (52) in Richtung auf den Elektromagneten (158) durch ein Federelement und in Richtung auf die Ventildüse (101) durch ein Zentrierelement federelastisch geführt und gelagert ist.

2. Dosierventil nach Anspruch 1,
**dadurch gekennzeichnet, dass** der Ankersitz (52) einstückig mit dem Anker (159) ausgebildet ist, wobei der Anker (159) vorzugsweise als Scheibenanker ausgebildet ist.

3. Dosierventil nach Anspruch 1,
**dadurch gekennzeichnet, dass** der Anker (159) ein Ringanker mit einer kreisförmigen Ausnehmung ist und der Ankersitz (52) durch die Ausnehmung durchsteckbar ist, wobei der Ankersitz (52) einen Ankerstützflansch (78) zur Abstützung des Ankers (159) bezüglich der Verschlussmechanik der Ventildüse (101) umfasst.

4. Dosierventil nach einem der vorhergehenden Ansprüche,
**dadurch gekennzeichnet, dass** der Ankersitz (52) in Richtung Elektromagneten (158) einen Außenkonusabschnitt (86) aufweist und das innere Eisenjoch (66) einen formkomplementären Innenkonusabschnitt (88) aufweist.

5. Dosierventil nach einem der vorhergehenden Ansprüche,
**dadurch gekennzeichnet, dass** das Federelement eine Schraubenfeder (161) ist, die entlang der Achse des inneren Eisenjochs (66) durch den Elektromagneten (158) geführt ist und sich an einem federspannungsverstellbaren Gewindebolzen (191) abstützt, wobei bevorzugt der Ankersitz (52) in Richtung Elektromagneten (158) einen Federzapfen (82) zur Aufnahme der Schraubenfeder (161) umfasst.

6. Dosierventil nach einem der vorhergehenden Ansprüche,
**dadurch gekennzeichnet, dass** das Zentrierelement eine Zentrierscheibe (54) ist, die eine radial steife und axial bewegliche Führung des Ankersitzes (52) bereitstellt.

7. Dosierventil nach Anspruch 6,
**dadurch gekennzeichnet, dass** die Zentrierscheibe (54) einen äußeren Stützring (56) zur Abstützung der Zentrierscheibe (54) am Ventilflansch (70), einen inneren Aufnahmering (60) zur Führung und Lagerung des Ankersitzes (52) sowie mehrere elastische Federarme (58) umfasst, die sich im Wesentlichen in Umfangsrichtung entlang eines Umfangsabschnitts von Stütz- und Aufnahmering (56, 60) erstreckend eine axial bewegliche und radial steife Führung des Aufnahmerings (60) bereitstellen.

8. Dosierventil nach Anspruch 7,
**dadurch gekennzeichnet, dass** der Aufnahmering (60) mehrere Zentrierfahnen (64) zur Aufnahme und Führung des Ankersitzes (52) aufweist und/oder der Stützring (56) mehrere Fixierfahnen (62) zur Befestigung der Zentrierscheibe (54) an der Unterseite des Elektromagneten (158) und am Ventilflanschboden (84) aufweist.

9. Dosierventil nach einem der Ansprüche 6 bis 8,
**dadurch gekennzeichnet**, das die Zentrierscheibe (54) aus einem federelastischen Material gefertigt ist, vorzugsweise aus einem Federstahl oder Berylliumkupfer, und die Federwirkung des Federelements (161) unterstützt.

10. Dosierventil nach einem der vorhergehenden Ansprüche,
**dadurch gekennzeichnet, dass** eine Dichtungsmembran (164) eine Aktuatorfläche (80) des Ankersitzes (52) fluiddicht gegenüber der Verschlussmechanik der Ventildüse (101), insbesondere einer Ventilnadel (160), abdichtet.

11. SCR-Dosiereinheit (100) zur Abgasnachbehandlung für eine dosierte Abgabe eines Fluids in einen Abgasstrang (177) einer Verbrennungskraftmaschine (155), **dadurch gekennzeichnet, dass** die Dosiereinheit (100) ein Dosierventil (34) nach einem der vorhergehenden Ansprüche enthält.

12. Abgasnachbehandlungseinrichtung (10) für eine Verbrennungskraftmaschine (177), insbesondere für einen Antriebsmotor eines Fahrzeuges,
**dadurch gekennzeichnet, dass** die Abgasnachbehandlungseinrichtung (10) eine SCR-Dosiereinheit (100) nach Anspruch 11 umfasst.

## Claims

1. An electromagnetic metering valve (34), in particular for an SCR metering unit (100) for aftertreatment of the exhaust gas of an internal combustion engine (155), comprising an electromagnet (158) having a cylindrical solenoid (167), an inner, essentially hollow cylindrical and an outer, essentially pot-shaped iron yoke (66, 68), and a ring- or disk-shaped, axially displaceable armature (159) for actuating a closing mechanism of a valve nozzle (101), whereby the armature is able to close and open a magnetic circuit between the inner and the outer iron yoke (66, 68) at one axial end of the electromagnet (158) by axial displacement,
**characterized in that**
- the armature (159) is guided by an armature seat (52), and
- the armature seat (52) is resiliently guided and supported in the direction of the electromagnet (158) by a spring element, and in the direction of the valve nozzle (101), by a centering element.

2. The metering valve according to Claim 1,
**characterized in that** the armature seat (52) is designed in one piece with the armature (159), wherein the armature (159) is preferably designed as a disk armature.

3. The metering valve according to Claim 1,
**characterized in that** the armature (159) is a ring armature having a circular recess, and the armature seat (52) is adapted to be pushed through the recess, wherein the armature seat (52) includes an armature supporting flange (78) for supporting the armature (159) with respect to the closing mechanism of the valve nozzle (101).

4. The metering valve according to one of the preceding claims,
**characterized in that** the armature seat (52) has an outer cone section (86) in the direction of the electromagnet (158), and the inner iron yoke (66) has a inner cone section (88) with a complementary shape.

5. The metering valve according to one of the preceding claims,
**characterized in that** the spring element is a coil spring (161) that is guided by the electromagnet (158) along the axis of the inner iron yoke (66), and is supported on a threaded bolt (191) that is adjustable by spring tension, wherein the armature seat (52) preferably includes a spring pin (82) in the direction of the electromagnet (158) for accommodating the coil spring (161).

6. The metering valve according to one of the preceding claims,
**characterized in that** the centering element is a centering disk (54) which provides radially rigid and axially movable guiding of the armature seat (52).

7. The metering valve according to Claim 6,
**characterized in that** the centering disk (54) includes an outer support ring (56) for supporting the centering disk (54) on the valve flange (70), an inner holding ring (60) for guiding and supporting the armature seat (52), and multiple elastic spring arms (58) which provide axially movable and radially rigid guiding of the holding ring (60) essentially in the peripheral direction along a circumferential section of the support ring and the holding ring (56, 60).

8. The metering valve according to Claim 7,
**characterized in that** the holding ring (60) has multiple centering tabs (64) for accommodating and guiding the armature seat (52), and/or the support ring (56) has multiple fixing tabs (62) for fastening the centering disk (54) to the bottom side of the electromagnet (158) and to the valve flange base (84).

9. The metering valve according to one of Claims 6 to 8,
**characterized in that** the centering disk (54) is made of a resilient material, preferably a spring steel or beryllium copper, and assists the spring action of the spring element (161).

10. The metering valve according to one of the preceding claims,
**characterized in that** a sealing membrane (164) seals off an actuator surface (80) of the armature seat (52) in a fluid-tight manner with respect to the closing mechanism of the valve nozzle (101), in particular a valve needle (160).

11. A SCR metering unit (100) for exhaust gas aftertreatment for a metered delivery of a fluid into an exhaust system (177) of an internal combustion engine (155),
**characterized in that** the metering unit (100) contains a metering valve (34) according to one of the preceding claims.

12. An exhaust gas aftertreatment device (10) for an internal combustion engine (177), in particular for a drive motor of a vehicle,
**characterized in that** the exhaust gas aftertreatment device (10) contains an SCR metering unit (100) according to Claim 11.

## Revendications

1. Soupape électromagnétique doseuse (34), en particulier pour une unité de dosage SCR (100), destinée au retraitement des gaz d'échappement d'un moteur à combustion interne (155) et comprenant un électroaimant (158) doté d'une bobine magnétique cylindrique (167), d'une culasse de fer (66, 68) intérieure sensiblement cylindrique et creuse et d'une culasse de fer (66, 68) extérieure sensiblement en forme de pot, ainsi que d'une armature (159) en forme d'anneau ou de disque déplaçable axialement et destinée à actionner un mécanisme de fermeture d'une buse de soupape (101) qui peut, sur une extrémité axiale de l'électroaimant (158), fermer ou ouvrir par déplacement axial un circuit magnétique entre les culasses de fer intérieure et extérieure (66, 68),
**caractérisée en ce que**
- ladite armature (159) est guidée par un siège d'armature (52), et
- le siège d'armature (52) est, en direction de l'électroaimant (158), guidé par un élément ressort et, en direction de ladite buse de soupape (101), guidé et supporté par un élément de centrage.

2. Soupape doseuse selon la revendication 1,
**caractérisée en ce que** le siège d'armature (52) est réalisé d'un seul tenant avec l'armature (159), cette dernière étant préférentiellement réalisée sous la forme d'un disque.

3. Soupape doseuse selon la revendication 1,
**caractérisée en ce que** l'armature (159) consiste en une armature annulaire dotée d'un évidement circulaire et que le siège d'armature (52) peut être introduit dans ledit évidement, le siège d'armature (52) comportant une bride de support (78) pour soutenir l'armature (159) par rapport au mécanisme de fermeture de la buse de soupape (101).

4. Soupape doseuse selon l'une des revendications précédentes,
**caractérisée en ce que** le siège d'armature (52) présente en direction de l'électroaimant (158) un tronçon conique extérieur (86), et la culasse de fer (66) intérieure un tronçon conique intérieur (88) complémentaire.

5. Soupape doseuse selon l'une des revendications précédentes,
**caractérisée en ce que** l'élément ressort consiste en un ressort hélicoïdal (161) qui est guidé le long de l'axe de la culasse de fer intérieure (66) à travers l'électroaimant (158) et qui s'appuie sur une tige filetée (191) réglable par tension de ressort, le siège de l'armature (52) comportant préférentiellement, en direction de l'électroaimant (158), un tourillon élastique (82) destiné à recevoir ledit ressort hélicoïdal (161).

6. Soupape doseuse selon l'une des revendications précédentes,
**caractérisée en ce que** l'élément de centrage consiste en un disque de centrage (54) qui assure le guidage radialement rigide et axialement mobile du siège de l'armature (52).

7. Soupape doseuse selon la revendication 6,
**caractérisée en ce que** ledit disque de centrage (54) comporte une bague d'appui extérieure (56) pour soutenir le disque de centrage (54) sur la bride de soupape (70), une bague de logement intérieure (60) destinée au guidage et au logement du siège d'armature (52) et plusieurs bras de ressort élastiques (58) qui s'étendent sensiblement en direction de la circonférence le long d'une portion de la circonférence des bagues d'appui et de logement (56, 60) et assurent le guidage axialement mobile et radialement rigide de la bague de logement (60).

8. Soupape doseuse selon la revendication 7,
**caractérisée en ce que** la bague de maintien (60) présente plusieurs ergots de centrage (64) destinés à recevoir et à guider le siège d'armature (52) et/ou que la bague d'appui (56) présente plusieurs ergots de fixation (62) pour fixer le disque de centrage (54) sur la face inférieure de l'électroaimant (158) et sur le fond de bride de soupape (84).

9. Soupape doseuse selon l'une des revendications 6 à 8,
**caractérisée en ce que** le disque de centrage (54) est réalisé à partir d'un matériau élastiquement déformable, en particulier à partir d'acier à ressort ou de cuivre-béryllium, lequel matériau favorise l'effet de ressort de l'élément ressort (161).

10. Soupape doseuse selon l'une des revendications précédentes,
**caractérisée en ce qu'**une membrane d'étanchéité (164) assure l'étanchéité au fluide d'une surface d'actionneur (80) du siège d'armature (52) par rapport au mécanisme de fermeture de la buse de soupape (101), en particulier par rapport à un pointeau de soupape (160).

11. Unité de dosage SCR (100) destinée au retraitement des gaz d'échappement (10) et permettant la délivrance dosée d'un fluide dans le conduit d'échappement (177) d'un moteur à combustion interne (155),
**caractérisée en ce que** cette unité de dosage (100) contient une soupape doseuse (34) selon l'une des revendications précédentes.

12. Dispositif de retraitement des gaz d'échappement (10) pour un moteur à combustion interne (177), en particulier pour un moteur d'entraînement d'un véhicule, **caractérisé en ce que** ce dispositif de retraitement des gaz d'échappement (10) comprend une unité de dosage SCR (100) selon la revendication 11.
